# EUROPEAN PATENT APPLICATION

(11) **EP 4 617 425 A1**
(43) Date of publication of application: **17.09.2025**
(21) Application number: 25163116.4
(22) Date of filing: 11.03.2025
(51) Int. Cl.: D21B 1/08, D21C 5/02, D21F 9/00, D21G 9/00, G06Q 10/30

(54) **RECYCLED SHEET GENERATION SYSTEM, METHOD FOR GENERATING RECYCLED SHEET, AND PROGRAM**

(30) Priority: 15.03.2024 JP 2024040823
(71) Applicant: Seiko Epson Corporation, Tokyo 160-8801 (JP)
(72) Inventor: MATSUZAKI, Takahiro, Suwa-shi, Nagano 392-8502 (JP); MIZUTANI, Seigo, Suwa-shi, Nagano 392-8502 (JP); SASAKI, Tsuneyuki, Suwa-shi, Nagano 392-8502 (JP); HORI, Naoto, Suwa-shi, Nagano 392-8502 (JP)
(74) Representative: MERH-IP Matias Erny Reichl Hoffmann Patentanwälte PartG mbB

(57) **Abstract**

A recycled sheet generation system includes a detection section that detects a type of material included in a raw material, a fiber separation section that generates fibers by separating the raw material, a sheet production section that produces a sheet by depositing a mixture in which a treatment agent is mixed with the fibers generated by the fiber separation section, a printing section that prints on the sheet, a history acquisition section configured to acquire, as history, a sheet configuration component based on the type of material that is included in the raw material and that was detected by the detection section and a sheet production condition, and a registration section that registers the sheet configuration component and the sheet production condition in association with each other. The printing section prints an access destination for accessing the registered sheet configuration component and the sheet production condition in a predetermined region of the sheet.

## Description

The present application is based on, and claims priority from JP Application Serial Number 2024-040823, filed March 15, 2024, the disclosure of which is hereby incorporated by reference herein in its entirety.

### BACKGROUND

### 1. Technical Field

The present disclosure relates to a recycled sheet generation system, a method for generating a recycled sheet, and a program.

### 2. Related Art

A recycled sheet generation system, such as JP-A-2018-168492, including a fiber separation section that separates fibers from a raw material, and a sheet generation section that produces a sheet using the fibers generated by fiber separation of the raw material, is disclosed. In such a recycled sheet generation system, history relating to an operation of the fiber separation section and the sheet generation section is transmitted to a management server. By this, the management server analyzes the operation of the fiber separation section and the operation of the sheet generation section based on the history related to the operations of the fiber separation section and the sheet production section.

However, in such a recycled sheet generation system, although the history is managed by the management server, the traceability of the produced sheets is low. Therefore, it is desired to improve convenience.

### SUMMARY

In order to overcome the above concern, a recycled sheet generation system includes a detection section configured to detect a type of material included in a raw material for producing a sheet; a fiber separation section that generates fibers by separating the raw material for producing the sheet; a sheet production section that produces the sheet by depositing a mixture in which a treatment agent is mixed with the fibers generated by the fiber separation section; a printing section that prints on the sheet produced by the sheet production section; a history acquisition section configured to acquire, as history, a sheet configuration component based on the type of material that is included in the raw material and that was detected by the detection section and a sheet production condition of when the sheet production section produces the sheet; and a registration section that registers, in association with each other, the sheet configuration component and the sheet production condition that were acquired by the history acquisition section, wherein the printing section prints an access destination for accessing the sheet configuration component and the sheet production condition registered by the registration section in a predetermined region of the sheet.

In order to overcome the above concern, a method for generating a recycled sheet includes, one or more computers executing detecting a type of material included in a raw material for producing a sheet; generating fibers by separating the raw material for producing the sheet; producing the sheet by depositing a mixture in which a treatment agent is mixed with the generated fibers; printing on the sheet; acquiring, as history, a sheet configuration component based on the type of material included in the raw material and a sheet production condition of when producing the sheet; registering the sheet configuration component and the sheet production condition in association with each other; and printing an access destination for accessing the sheet configuration component and the sheet production condition in a predetermined region of the sheet.

In order to overcome the above concern, a non-transitory computer readable storage medium storing a program to be executed by one or more computers, the program comprising detecting a type of material included in a raw material for producing a sheet; generating fibers by separating the raw material for producing the sheet; producing the sheet by depositing a mixture in which a treatment agent is mixed with the generated fibers; printing on the sheet; acquiring, as history, a sheet configuration component based on the type of material included in the raw material and a sheet production condition of when producing the sheet; registering the sheet configuration component and the sheet production condition in association with each other; and printing an access destination for accessing the sheet configuration component and the sheet production condition in a predetermined region of the sheet.

### BRIEF DESCRIPTION OF THE DRAWINGS

FIG. 1 is a block diagram showing a recycled sheet generation system according to a first embodiment.
FIG. 2 is a schematic diagram showing a setting storage section of the first embodiment.
FIG. 3 is a schematic diagram showing a history storage section of the first embodiment.
FIG. 4 is a schematic view showing various regions in the sheet of the first embodiment.
FIG. 5 is a flowchart showing a setting control process of the first embodiment.
FIG. 6 is a flowchart showing a history control process of the first embodiment.
FIG. 7 is a flowchart showing a history provision process of the first embodiment.

### DESCRIPTION OF EMBODIMENTS

### FIRST EMBODIMENT

Hereinafter, an embodiment of a recycled sheet generation system, a method for generating recycled sheet, and a program will be described.

### Configuration of the recycled sheet generation system 10

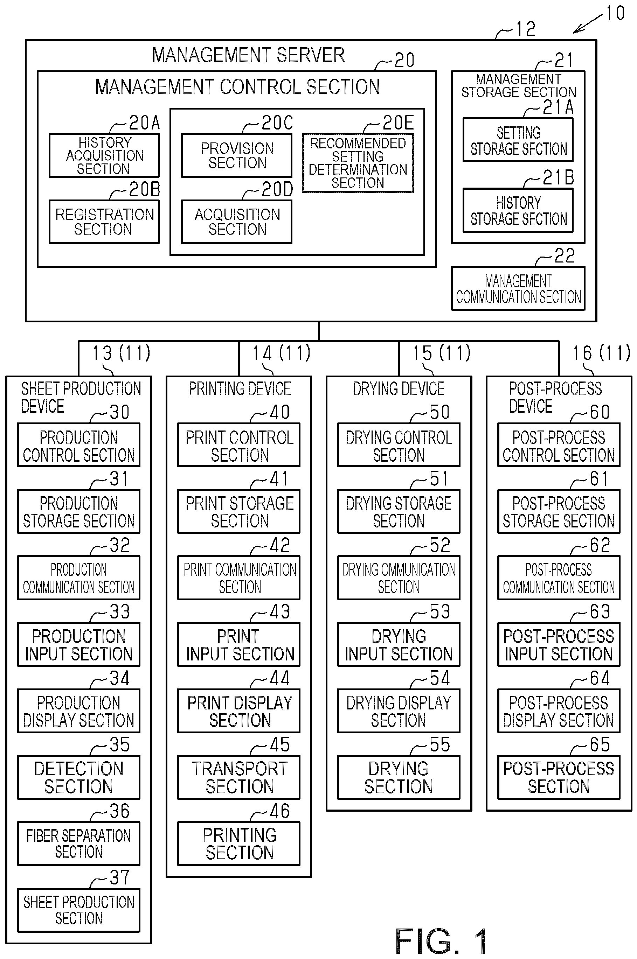

As shown in FIG. 1, a recycled sheet generation system 10 is a system that generates fibers by separating a raw material and generates a recycled sheet using the generated fibers. The raw material is a material for producing the recycled sheet. The raw material may include clothing, for example. The fibers may include, for example, cotton material. The recycled sheet may be, for example, a non-woven fabric sheet. Hereinafter, the recycled sheet may be simply referred to as "sheet."

The recycled sheet generation system 10 is equipped with a control device 11 and a management server 12. The recycled sheet generation system 10 may be equipped with a plurality of control devices 11. The control device 11 is a device that performs control related to sheets to be produced using separated fibers.

The control device 11 may be equipped with a sheet production device 13, a printing device 14, a drying device 15, and a post-process device 16. In other words, the recycled sheet generation system 10 may be equipped with the sheet production device 13, the printing device 14, the drying device 15, and the post-process device 16. The sheet production device 13, the printing device 14, the drying device 15, and the post-process device 16 are communicably connected to each other.

The recycled sheet generation system 10 may be equipped with a terminal device (not shown). The terminal device can communicate with the control device 11 and the management server 12. The terminal device may be a device managed by the user. The user may be the same as or different from an administrator of the control device 11. The terminal device is composed of one or more computers. The terminal device may be equipped with a terminal control section, a terminal storage section, a terminal communication section, a terminal input section, a terminal display section, and a terminal imaging section.

The management server 12 is communicably connected to the control device 11. In other words, the management server 12 is communicably connected to the sheet production device 13, the printing device 14, the drying device 15, and the post-process device 16. The control device 11 and the management server 12 may be communicably connected via an arbitrary network. Hereafter, communication between the control device 11 and the management server 12 via a network will be omitted.

The management server 12 is a device that manages the recycled sheet generation system 10. The sheet production device 13 is a device that produces a sheet using fibers obtained by fiber separation of a raw material. The printing device 14 is a device that prints an image on a produced sheet. The drying device 15 is a device that dries the printed sheet. The post-process device 16 is a device that performs a post-process of the printed sheet. The post-process may include, for example, tumbler process, and may include overcoat process.

### Configuration of the sheet production device 13

The sheet production device 13 is composed of one or more computers. The sheet production device 13 is equipped with a production control section 30, a production storage section 31, a production communication section 32, a production input section 33, and a production display section 34.

The production control section 30 controls the sheet production device 13. The production control section 30 includes a calculation device and a main storage medium. The calculation device loads an operating system (OS) and a program from the production storage section 31 to the main storage medium, and executes instructions retrieved from the main storage medium. The calculation device consists of one or more circuits. The circuit may be a central processing unit (CPU), a graphic processing unit (GPU), or a neural network processing unit (NPU). The production storage section 31 may be a sub-storage medium and may store programs.

The production communication section 32 is mounted as hardware, software, or a combination thereof. The production communication section 32 transmits and receives data to and from each device. The production input section 33 is configured to input information in response to the user's operation. The production input section 33 may be a touch panel integrated with the production display section 34. The production input section 33 may be operation buttons. The production display section 34 displays information in response to an output instruction of the production control section 30.

The sheet production device 13 may be equipped with a detection section 35. The detection section 35 detects a type of material included in a raw material for producing a sheet. The detection section 35 may detect a sheet configuration component.

The sheet configuration component may include at least any of a type of material included in the raw material, content of the material included in the raw material, a substance included in the produced sheet, and the place of origin of the raw material. In particular, the sheet configuration component may include at least any of the amount of recycled material used, the presence or absence of chemical substances, the presence or absence of metals, and the presence or absence of allergy-inducing materials. The sheet configuration component may include a supply source of the raw material.

The detection section 35 may detect the sheet configuration component by using, for example, at least any of an infrared spectroscopy technique and a chromatography technique. The infrared spectroscopy technique may include analysis using, for example, Fourier-transform infrared spectroscopy or spectrofluorometry. The chromatography technique may include, for example, mass spectrometry using direct analysis in real time.

The detection section 35 may detect the type of the material from identification information of the raw material. The identification information of the raw material may be capable of identifying the raw material itself, or may be capable of identifying the type of material included in the raw material. The production control section 30 analyzes the sheet configuration component based on the type of material detected by the detection section 35. In this way, the detection section 35 is configured to detect the sheet configuration component.

The sheet production device 13 is equipped with a fiber separation section 36. The fiber separation section 36 generates fibers by separating the raw material that are used to produce the sheet. The fiber separation section 36 may classify the fibers by centrifugal separation. As a specific example, the fiber separation section 36 classifies the fibers into light fibers and heavy fibers by centrifugal separation. The fiber separation section 36 may classify the light fibers as clothing and the heavy fibers as functional materials other than clothing.

The sheet production device 13 is equipped with a sheet production section 37. The sheet production section 37 produces sheets. Specifically, the sheet production section 37 mixes a treatment agent with the fibers generated by the fiber separation section 36. The sheet production section 37 deposits the mixture obtained by mixing the treatment agent with the fibers. The sheet production section 37 may deposit the mixture on a sheet-like fabric in the air or may deposit the mixture on a sheet-like base material different from the fabric in the air. The sheet production section 37 produces a sheet by applying pressure to the fabric on which the mixture has been deposited. The sheet production section 37 produces a sheet based on the sheet configuration component and a sheet production condition.

The sheet production condition may include at least any of the number of layers, thickness, irregularities, base color, heating temperature, fabric weight, the material type of the outermost front surface, and the material type of the outermost back surface of the sheet. The sheet production condition may include at least any of a joint position of the non-woven fabric sheet, a hole section of the sheet, a stretch amount of the sheet, and a fabric moisture amount of the sheet. The sheet production condition may include a fiber separation condition. The fiber separation condition may include at least any of a fiber separation time, a fiber length, and a fiber weight.

### Configuration of the printing device 14

The printing device 14 is composed of one or more computers. The printing device 14 is equipped with a print control section 40, a print storage section 41, a print communication section 42, a print input section 43, and a print display section 44.

The print control section 40 controls the printing device 14. The printing device 14 is configured in the same way as the sheet production device 13. Therefore, description of the print control section 40, the print storage section 41, the print communication section 42, the print input section 43, and the print display section 44 will be omitted.

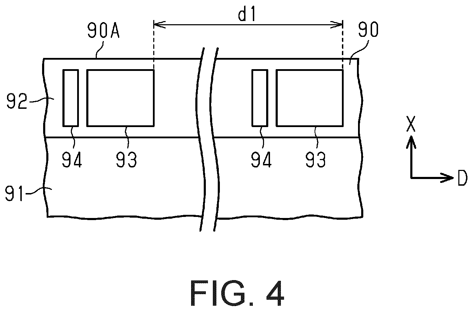

The printing device 14 is equipped with a transport section 45 and a printing section 46. The transport section 45 transports the sheet produced by the sheet production device 13. The transport section 45 transports the sheet to be printed by the printing section 46 along the transport direction D shown in FIG. 4.

The printing section 46 prints an image on the sheet produced by the sheet production device 13. The printing section 46 prints an image on the sheet transported by the transport section 45. The printing section 46 prints an image on the sheet produced by the sheet production device 13 based on a printing condition. The printing section 46 prints the print image designated by the user onto the sheet. The printing section 46 prints an access destination and a password for accessing production history in a predetermined region of the sheet.

The printing condition may include at least any of a type of liquid ejected onto the sheet, a position of the liquid ejection head, liquid ejection amount, a print range, color correction, sheet stretch correction, and tension of the sheet. The type of liquid may include pigment ink and dye ink. The dye ink may include reactive dye ink, acid dye ink, and disperse dye ink.

### Configuration of the drying device 15

The drying device 15 is composed of one or more computers. The drying device 15 is equipped with a drying control section 50, a drying storage section 51, a drying communication section 52, a drying input section 53, and a drying display section 54.

The drying control section 50 controls the drying device 15. The drying device 15 is configured in the same way as the sheet production device 13. Therefore, description of the drying control section 50, the drying storage section 51, the drying communication section 52, the drying input section 53, and the drying display section 54 will be omitted.

The drying device 15 is equipped with a drying section 55. The drying section 55 dries the sheet printed by the printing device 14. The drying section 55 dries the sheet printed by the printing device 14 based on a drying condition. The drying section 55 dries the sheet printed by the printing device 14 before post-process, but the sheet printed by the printing device 14 may be dried after the post-process. The drying condition may include at least any of drying time and drying temperature.

### Configuration of the post-process device 16

The post-process device 16 is composed of one or more computers. The post-process device 16 is equipped with a post-process control section 60, a post-process storage section 61, a post-process communication section 62, a post-process input section 63, and a post-process display section 64.

The post-process control section 60 controls the post-process device 16. The post-process device 16 is configured in the same way as the sheet production device 13. Therefore, description of the post-process control section 60, the post-process storage section 61, the post-process communication section 62, the post-process input section 63, and the post-process display section 64 will be omitted.

The post-process device 16 is equipped with a post-process section 65. The post-process section 65 performs a post-process of the sheet printed by the printing device 14. The post-process section 65 performs the post-process of the sheet printed by the printing device 14 based on a post-process condition. The post-process section 65 performs the post-process of the sheet after being dried by the drying device 15, but may perform the post-process of the sheet before being dried by the drying device 15.

The post-process condition may include at least any of a type of post-process, a coating condition, and a tumbler condition. The type of post-process may include coating process and tumbler process. The coating condition may include a process condition for the coating process on the surface of the sheet. The tumbler condition may include a tumbler process condition for the sheet.

### Configuration of the management server 12

The management server 12 is composed of one or more computers. The management server 12 is equipped with a management control section 20, a management storage section 21, and a management communication section 22. The management server 12 may be equipped with a management input section and a management display section.

The management control section 20 controls the management server 12. The management server 12 is configured in the same way as the sheet production device 13. Therefore, description of the management control section 20, the management storage section 21, and the management communication section 22 will be omitted.

In the management server 12, the management control section 20, by executing a program, functions as a history acquisition section 20A, a registration section 20B, a provision section 20C, an acquisition section 20D, and a recommended setting determination section 20E. In other words, the management server 12 is equipped with the history acquisition section 20A, the registration section 20B, the provision section 20C, the acquisition section 20D, and the recommended setting determination section 20E.

The history acquisition section 20A acquires production history relating to the sheet. The history acquisition section 20A acquires the production history by receiving the production history from the control device 11.

The production history is history relating to the raw material used in the sheet, the production of the sheet, the printing on the sheet, the drying of the sheet, and the post-process for the sheet. More specifically, the production history includes a history of the sheet configuration component that was actually detected by the sheet production device 13 during the production of the sheet. The production history includes history of the sheet production condition that was actually set during the production of the sheet by the sheet production device 13 The production history includes history of the printing condition that was actually set during the printing by the printing device 14 The production history includes history of the drying condition that was actually set during the drying of the sheet by the drying device 15. The production history includes history of the post-process condition that was actually set during the post-process for the sheet by the post-process device 16.

In this way, the history acquisition section 20A acquires the sheet configuration component as the production history by receiving the sheet configuration component from the control device 11. The history acquisition section 20A acquires the sheet production condition as the production history by receiving a sheet production condition of when the sheet production device 13 produces the sheet, from the control device 11. The history acquisition section 20A acquires the printing condition as the production history by receiving a printing condition of when the printing device 14 prints on the sheet from the control device 11. The history acquisition section 20A acquires the drying condition as the production history by receiving a drying condition of when the drying device 15 will dry the sheet from the control device 11. The history acquisition section 20A acquires the post-process condition as the production history by receiving a post-process condition of when the post-process device 16 will perform the post-process from the control device 11.

The registration section 20B associates the production histories acquired by the history acquisition section 20A and registers them in the history storage section 21B of the management storage section 21. Specifically, the registration section 20B associates the sheet configuration component, the sheet production condition, the printing condition, the drying condition, and the post-process condition acquired by the history acquisition section 20A, and registers them as the production history in the history storage section 21B. The registration section 20B registers an access destination and a password for accessing the production history in the history storage section 21B.

The provision section 20C provides various kinds of information to the devices. Specifically, the provision section 20C provides the access destination and the password to the printing device 14. The provision section 20C provides a recommended setting that was determined by the recommended setting determination section 20E to the control device 11.

In particular, the provision section 20C provides a recommended setting of the sheet production condition determined by the recommended setting determination section 20E to the sheet production device 13. The provision section 20C provides a recommended setting of the printing condition that was determined by the recommended setting determination section 20E to the printing device 14. The provision section 20C provides a recommended setting of the drying condition that was determined by the recommended setting determination section 20E to the drying device 15. The provision section 20C provides a recommended setting of the post-process condition that was determined by the recommended setting determination section 20E to the post-process device 16.

The acquisition section 20D acquires the sheet configuration component detected by the sheet production device 13. The acquisition section 20D acquires the sheet configuration component by receiving the sheet configuration component from the control device 11. The acquisition section 20D acquires various settings. The acquisition section 20D acquires various settings by receiving the various settings from the control device 11.

Specifically, the acquisition section 20D acquires a setting of the sheet production condition of when the sheet production device 13 produces the sheet. The acquisition section 20D acquires a setting of the printing condition of when the printing device 14 will print. The acquisition section 20D acquires a setting of the drying condition of when the drying device 15 will dry the sheet. The acquisition section 20D acquires a setting of the post-process condition of when the post-process device 16 will perform post-perform for the sheet.

The recommended setting determination section 20E determines the recommended setting based on various kinds of information. The recommended setting determination section 20E determines the recommended setting based on any of the sheet configuration component, the sheet production condition, the printing condition, the drying condition, and the post-process condition.

The recommended setting determination section 20E determines the recommended setting of the sheet production condition based on any of the sheet configuration component, the setting of the printing condition, the setting of the drying condition, and the setting of the post-process condition. The recommended setting determination section 20E determines the recommended setting of the printing condition based on any of the sheet configuration component, the setting of the sheet production condition, the setting of the drying condition, and the setting of the post-process condition. The recommended setting determination section 20E determines the recommended setting of the drying condition based on any of the sheet configuration component, the setting of the sheet production condition, the setting of the printing condition, and the setting of the post-process condition. The recommended setting determination section 20E determines the recommended setting of the post-process condition based on any of the sheet configuration component, the setting of the sheet production condition, the setting of the printing condition, and the setting of the drying condition.

### Data structure of the setting storage section 21A

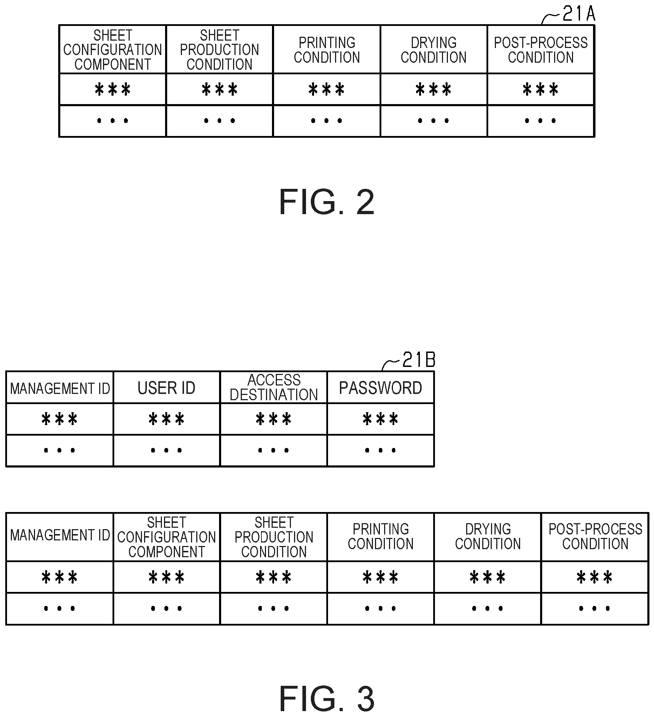

As shown in FIGS. 1 and 2, the management storage section 21 is equipped with a setting storage section 21A. The setting storage section 21A stores a recommended setting database. The recommended setting database is a database in which a correspondence relationship between the recommended settings is stored for each setting item. The setting items may include the sheet configuration component, the sheet production condition, the printing condition, the drying condition, and the post-process condition.

In this way, the setting storage section 21A stores the correspondence relationship between a recommended component of the sheet configuration component, the recommended setting of the sheet production condition, the recommended setting of the printing condition, the recommended setting of the drying condition, and the recommended setting of the post-process condition.

The recommended setting is estimated by referring to the recommended setting database. Specifically, when the user specifies the sheet configuration component and the setting of the printing condition, a recommended setting of the sheet production condition, a recommended setting of the drying condition, and a recommended setting of the post-process condition will be estimated based on the sheet configuration component and the setting of the printing condition. When the user specified the sheet configuration component and the setting of the sheet production condition, a recommended setting of the printing condition, a recommended setting of the drying condition, and a recommended setting of the post-process condition will be estimated based on the sheet configuration component and the setting of the sheet production condition.

As a specific example of the recommended setting database, the number of layers of the sheet, the thickness of the sheet, and the irregularities of the sheet as the sheet production condition may be associated with the position of the liquid ejecting head as the printing condition. By this, printing can be performed under the recommended printing condition for the sheet to be produced.

The base color of the sheet, the heating temperature of the sheet, and the fabric weight of the sheet as the sheet production condition may be associated with the color correction and the liquid ejection amount as the printing condition. By this, printing can be performed under the recommended printing condition for the sheet to be produced.

The joint position of the non-woven fabric sheet, and the hole section of the sheet may be associated with the print range as the printing condition. By this, it is possible to control so that it prints in an appropriate print range.

The stretch amount of the sheet as the sheet production condition may be associated with the sheet stretch correction as the printing condition. By this, printing can be performed under the recommended printing condition for the stretch amount of the sheet.

The raw material as the sheet configuration component may be associated with the liquid ejection amount as the printing condition. By this, printing can be performed under a suitable printing condition for the raw material as the sheet configuration component.

The fabric moisture amount of the sheet as the sheet production condition may be associated with the drying time and the drying temperature as the drying condition. By this, drying can be performed under the recommended drying condition for the sheet to be produced.

The thickness of the sheet, the stretch amount of the sheet, and the type of material of the outermost front surface of the sheet as the sheet production condition may be associated with the tumbler process time as the post-process condition. By this, the post-process can be performed under the recommended post-process condition for the sheet to be produced.

The type of material of the outermost front surface of the sheet as the sheet production condition may be associated with the process condition of the coating process as the post-process condition. By this, the post-process can be performed under the recommended post-process condition for the sheet to be produced.

### Data structure of the history storage section 21B

As shown in FIGS. 1 and 3, the management storage section 21 is equipped with a history storage section 21B. The history storage section 21B storages a history database. The history database is a database for managing the production history.

In the production history database, a management ID, a user ID, the access destination, the password, and the production history are associated with each other. The management ID is information for managing the production history. The user ID is identification information of the user who produces a sheet. The access destination and the password are information for accessing the production history corresponding to the management ID.

In this way, when the production including the producing of the sheet, the printing on the sheet, the drying of the sheet, and the post-process for the sheet is performed, the production history corresponding to the management ID is stored in the history storage section 21B so that it accumulates. When authentication is successfully performed using the access destination and the password, it is possible to access the production history stored in the history storage section 21B.

### Access destination image 93 and password image 94

As shown in FIG. 4, a recycled cloth 90, which is an example of the sheet, has a first region 91 and a second region 92. The recycled cloth 90 is transported in the transport direction D. The transport direction D is a direction that intersects a width direction X of the recycled cloth 90. The first region 91 is a region located at the center in the width direction X of the recycled cloth 90. The second region 92 is a region located on an end section 90A side in the width direction X of the recycled cloth 90. The second region 92 is a region of the recycled cloth 90 that is difficult to use as fabric.

An image designated by the user is printed in the first region 91 by the printing device 14. In the second region 92, the image designated by the user is not printed by the printing device 14. In the second region 92, an access destination image 93 and a password image 94 are printed by the printing device 14 separately from the image designated by the user. The region where the access destination image 93 and the password image 94 are printed corresponds to an example of a predetermined region.

The access destination image 93 is an image showing the access destination to the production history of the recycled cloth 90. The access destination image 93 may be a two-dimensional code. The access destination image 93 may include an image indicating the management ID corresponding to the production history of the recycled cloth 90. The password image 94 is an image showing a password that allows access to the production history of the recycled cloth 90.

The access destination image 93 and the password image 94 are printed at intervals of distance d1 in the transport direction D. In other words, the printing section 46 prints the access destination and the password at predetermined intervals indicated by the distance d1 in the transport direction D.

### Various processes

Here, various processes will be described. Hereinafter, the processes executed by the control device 11 and the management server 12 will be described. In particular, processes centered on the printing device 14 on behalf of the control device 11 will be explained, and processes performed by the sheet production device 13, the drying device 15, and the post-process device 16 will be described focusing on different items.

### Setting control process

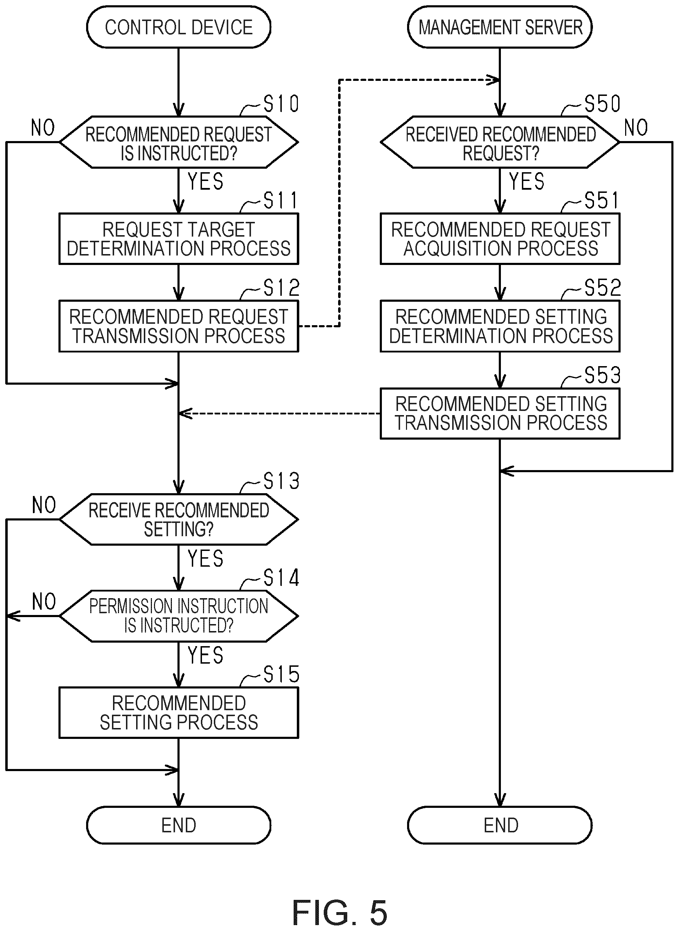

A setting control process will be described with reference to FIG. 5. The setting control process is a process that is executed by the control device 11 and the management server 12 in a specific cycle.

As shown in FIG. 5, in the printing device 14, in step S10, the print control section 40 determines whether or not a recommended request is instructed. The recommended request is a request made by the user's instruction. The recommended request may be input from the print input section 43. The recommended request is a request for a recommended setting for the management server 12.

If the print control section 40 determines that no recommended request has been instructed, the process proceeds to step S13. If the print control section 40 determines that a recommended request has been instructed, the process proceeds to step S11.

In step S11, the print control section 40 executes a request target determination process. In this process, the print control section 40 may determine the request target of the recommended setting according to the user's instruction. The print control section 40 may determine one or more recommended setting request targets in accordance with the user' instruction.

As a specific example, the print control section 40 may determine, according to the user's instruction, the sheet production condition as the request target of the recommended setting. The print control section 40 may determine, according to the user's instruction, the printing condition as a request target of the recommended setting. The print control section 40 may determine, according to the user's instruction, the sheet production condition, the drying condition, and the post-process condition as the request target of the recommended setting. The print control section 40 may determine, according to the user's instruction, the printing condition, the drying condition, and the post-process condition as the request target of the recommended setting.

In step S12, the print control section 40 executes a recommended request transmission process. The print control section 40 transmits the recommended request to the management server 12. The recommended request may include various settings and conditions determined as the request target of the recommended setting.

As a specific example, when the print control section 40 determines the sheet production condition as the request target of the recommended setting, the print control section 40 acquires, except for the sheet production condition, the sheet configuration component, the setting of the printing condition, the setting of the drying condition, and the setting of the post-process condition. The print control section 40 may acquire the sheet configuration component, the setting of the drying condition, and the setting of the post-process condition by communicating with the sheet production device 13, the drying device 15, and the post-process device 16. The print control section 40 generates the recommended request that includes the acquired sheet configuration component, the setting of the printing condition, the setting of the drying condition, and the setting of the post-process condition, and the fact that the sheet production condition is the request target of the recommended setting.

When the print control section 40 has determined the printing condition as the request target of the recommended setting, the print control section 40 acquires, except for the printing condition, the sheet configuration component, the setting of the sheet production condition, the setting of the drying condition, and the setting of the post-process condition. The print control section 40 may acquire the sheet configuration component, the setting of the sheet production condition, the setting of the drying condition, and the setting of the post-process condition by communicating with the sheet production device 13, the drying device 15, and the post-process device 16. The print control section 40 generates the recommended request that includes the acquired sheet configuration component, the setting of the sheet production condition, the setting of the drying condition, and the setting of the post-process condition, and a fact that the printing condition is the request target of the recommended setting.

When the print control section 40 determined the drying condition as the recommended setting request target, the print control section 40 acquires, except for the drying condition, the sheet configuration component, the setting of the sheet production condition, the setting of the printing condition, and the setting of the post-process condition. The print control section 40 may acquire the sheet configuration component, the setting of the sheet production condition, and the setting of the post-process condition by communicating with the sheet production device 13 and the post-process device 16. The print control section 40 generates the recommended request that includes the acquired sheet configuration component, the setting of the sheet production condition, the setting of the printing condition, and the setting of the post-process condition, and the fact that the drying condition is the request target of the recommended setting.

When the print control section 40 determined the post-process condition as the request target of the recommended setting, the print control section 40 acquires, except for the post-process condition, the sheet configuration component, the setting of the sheet production condition, the setting of the printing condition, and the setting of the drying condition. The print control section 40 may acquire the sheet configuration component, the setting of the sheet production condition, and the setting of the drying condition by communicating with the sheet production device 13 and the drying device 15. The print control section 40 generates the recommended request that includes the acquired sheet configuration component, the setting of the sheet production condition, the setting of the printing condition, and the setting of the drying condition, and the fact that the post-process condition is the request target of the recommended setting.

In management server 12, in step S50, the management control section 20 determines whether a recommended request has been received from the printing device 14. If the management control section 20 determines that the recommended request has not been received from the printing device 14, the management control section 20 ends the setting control process. If the management control section 20 determines that the recommended request has been received from the printing device 14, the process proceeds to step S51.

In step S51, the management control section 20 executes a recommended request acquisition process. In this process, the management control section 20 receives the sheet configuration component and the setting of the various conditions included in the recommended request from the printing device 14, thereby acquiring the sheet configuration component and the setting of the various conditions.

Specifically, when the sheet configuration component, which was detected by the sheet production device 13, is included in the recommended request, the management control section 20 acquires the sheet configuration component. When the setting of the sheet production condition of when the sheet production device 13 produces the sheet, is included in the recommended request, the management control section 20 acquires the setting of the sheet production condition. When the setting of the printing condition of when the printing device 14 prints on the sheet is included in the recommended request, the management control section 20 acquires the setting of the printing condition. When the setting of the drying condition of when the drying device 15 dries the sheet is included in the recommended request, the management control section 20 acquires the setting of the drying condition. When the setting of the post-process condition of when the post-process device 16 performs the post-process for the sheet is included in the recommended request, the management control section 20 acquires the setting of the post-process condition.

In step S52, the management control section 20 executes a recommended setting determination process. In this process, the management control section 20 determines the recommended setting corresponding to the setting item of the request target based on the setting included in the recommended request. The management control section 20 determines the recommended setting by referring to the recommended setting database and reading out the recommended setting corresponding to the setting included in the recommended request for each setting item that is to be the request target.

In this way, the management control section 20 determines the recommended setting based on the recommended setting database and the setting received from the printing device 14. In other words, the management control section 20 determines the recommended setting based on the correspondence relationship between the various conditions and on the setting received from the printing device 14.

The management control section 20 determines the recommended setting of the sheet production condition based on at least any of the sheet configuration component, the setting of the printing condition, the setting of the drying condition, and the setting of the post-process condition. The management control section 20 determines the recommended setting of the printing condition based on at least any of the sheet configuration component, the setting of the sheet production condition, the setting of the drying condition, and the setting of the post-process condition. The management control section 20 determines the recommended setting of the drying condition based on at least any of the sheet configuration component, the setting of the sheet production condition, the setting of the printing condition, and the setting of the post-process condition. The management control section 20 determines the recommended setting of the post-process condition based on at least any of the sheet configuration component, the setting of the sheet production condition, the setting of the printing condition, and the setting of the drying condition.

As a specific example, the management control section 20 refers to the recommended setting database and determines the recommended setting corresponding to the sheet configuration component and the setting of the printing condition as the recommended setting of the sheet production condition, the recommended setting of the drying condition, and the recommended setting of the post-process condition. The management control section 20 refers to the recommended setting database and determines the recommended setting corresponding to the sheet configuration component and the setting of the sheet production condition as the recommended setting of the printing condition, the recommended setting of the drying condition, and the recommended setting of the post-process condition.

In step S53, the management control section 20 executes a recommended setting transmission process. In this process, the management control section 20 transmits the recommended setting to the printing device 14 that transmitted the recommended request. By this, the management control section 20 provides the various recommended settings to control device 11.

In the printing device 14, in step S13, the print control section 40 determines whether the recommended setting has been received from the management server 12. If the print control section 40 determines that the recommended setting has not been received from the management server 12, the print control section 40 ends the setting control process. If the print control section 40 determines that the recommended setting has been received from the management server 12, the process proceeds to step S14.

In step S14, the print control section 40 determines whether or not a permission instruction has been instructed by the user. If the print control section 40 determines that no permission instruction has been instructed by the user, the print control section 40 ends the setting control process. If the print control section 40 determines that a permission instruction has been instructed by the user, the process proceeds to step S15.

In step S15, the print control section 40 executes a recommended setting process. In this process, the print control section 40 performs control so as to set the received recommended setting. Specifically, when the print control section 40 receives the recommended setting of the sheet production condition, it performs control to set the recommended setting of the sheet production condition to the sheet production device 13 by communicating with the sheet production device 13. By this, the sheet production section 37 produces the sheet based on the recommended setting of the sheet production condition in response to the user's instruction.

When the print control section 40 receives the recommended setting of the printing condition, it performs control to set the recommended setting of the printing condition. By this, the printing section 46 prints an image on the sheet based on the recommended setting of the printing condition in response to the user's instruction.

When the print control section 40 receives the recommended setting of the drying condition, it controls to set the recommended setting of the drying condition to the drying device 15 by communicating with the drying device 15. By this, the drying section 55 dries the sheet based on the recommended setting of the drying condition in response to the user's instruction.

When the print control section 40 receives the recommended setting of the post-process condition, it performs control to set the recommended setting of the post-process condition to the post-process device 16 by communicating with the post-process device 16. By this, the post-process section 65 performs the post-process for the sheet based on the recommended setting of the post-process condition in response to the user's instruction.

In this way, when a provision condition of the recommended setting is satisfied, the management control section 20 provides the recommended setting to the control device 11. The provision condition of the recommended setting is satisfied when the recommended request is received from the printing device 14.

Specifically, when the provision condition of the recommended setting is satisfied, the management control section 20 provides the recommended setting of the sheet production condition to the sheet production device 13. When the provision condition of the recommended setting is satisfied, the management control section 20 provides the recommended setting of the printing condition to the printing device 14. When the provision condition of the recommended setting is satisfied, the management control section 20 provides the recommended setting of the drying condition to the drying device 15. When the provision condition of the recommended setting is satisfied, the management control section 20 provides the recommended setting of the post-process condition to the post-process device 16.

### History control process

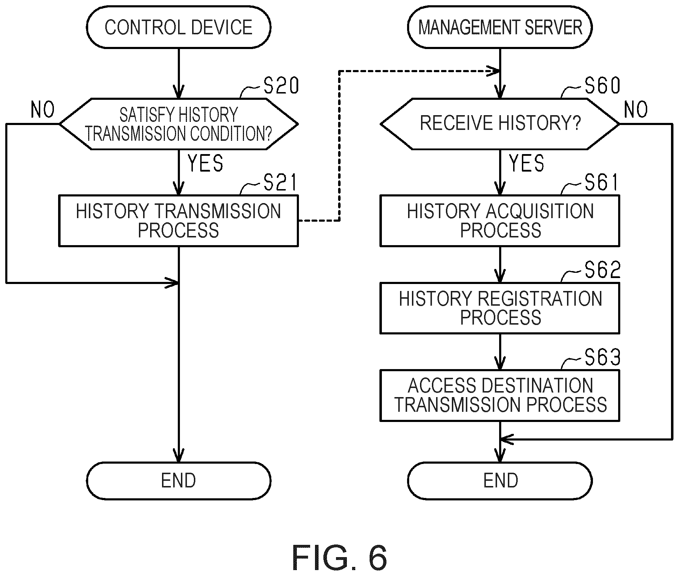

A history control process will be described with reference to FIG. 6. The history control process is a process executed by the control device 11 and the management server 12 in a specific cycle.

As shown in FIG. 6, in the printing device 14, in step S20, the print control section 40 determines whether or not a history transmission condition is satisfied. The history transmission condition may be satisfied for each production lot of sheets, or may be satisfied for each produced sheet. The history transmission condition may be satisfied before the start of producing, during producing, or after the end of producing of the production lot of sheets. In other words, the history transmission condition may be satisfied before the start of sheet producing, during producing, or after the completion of producing. The history transmission condition may be satisfied before the start of printing on the sheet, during printing, or after the completion of printing. The history transmission condition may be satisfied before the start of drying of the sheet, during drying, or after the completion of drying. The history transmission condition may be satisfied before the start of the sheet post-process, during post-process, or after the completion of post-process.

If the print control section 40 determines that the history transmission condition is not satisfied, the print control section 40 ends the history control process. If the print control section 40 determines that the history transmission condition is satisfied, the process proceeds to step S21.

In step S21, the print control section 40 executes a history transmission process. In this process, the print control section 40 acquires the production history. Specifically, the print control section 40 acquires the sheet configuration component detected by the detection section 35 as the production history by communicating with the sheet production device 13. The print control section 40 acquires the sheet production condition as the production history by communicating with the sheet production device 13. The print control section 40 acquires the printing condition from the print storage section 41 as the production history. The print control section 40 acquires the drying condition as the production history by communicating with the drying device 15. The print control section 40 acquires the post-process condition as the production history by communicating with the post-process device 16. The print control section 40 transmits the acquired production history to the management server 12.

In the management server 12, in step S60, the management control section 20 determines whether or not the production history is received from the printing device 14. If the management control section 20 determines that the production history has not been received from the printing device 14, the management control section 20 ends the history control process. If the management control section 20 determines that the production history is received from the printing device 14, the process proceeds to step S61.

In step S61, the management control section 20 executes a history acquisition process. In this process, the management control section 20 acquires the production history by receiving the production history from the printing device 14.

Specifically, the management control section 20 acquires the sheet configuration component detected by the sheet production device 13 and the sheet production condition of when the sheet production device 13 produces the sheet as the production history. The management control section 20 acquires the printing condition of when the printing device 14 prints on the sheet as the production history. The management control section 20 acquires the drying condition of when the drying device 15 dries the sheet as the production history. The management control section 20 acquires the post-process condition of when the post-process device 16 performs the post-process for the sheet as the production history.

In step S62, the management control section 20 executes a history registration process. In this process, the management control section 20 acquires the user ID of the user who uses the printing device 14, which is the transmission source of the production history, from the management storage section 21. The management control section 20 generates the management ID, the access destination, and the password. The management control section 20 associates the management ID, the user ID, the access destination, the password, and the production history, and registers them in the history storage section 21B.

In this way, the management control section 20 associates the management ID, the sheet configuration component, the sheet production condition, the printing condition, the drying condition, and the post-process condition, and registers them as the production history. The management control section 20 registers the management ID, the access destination, and the password in association with each other. By this, the management control section 20 registers the production history, the access destination, and the password in association with each other.

In step S63, the management control section 20 executes an access destination transmission process. In this process, the management control section 20 transmits the access destination and the password, which were associated with the production history, to the printing device 14. By this, when the provision condition of the access destination is satisfied, the management control section 20 provides the access destination and the password to the printing device 14.

In the printing device 14, the print control section 40 receives the access destination and the password. When the print control section 40 prints an image on the sheet, the print control section 40 prints an access destination image 93 and a password image 94 in a predetermined region of the sheet based on the access destination and the password.

In this way, the printing section 46 prints the access destination and the password for accessing the production history in a predetermined region of the sheet. In particular, the printing section 46 prints the access destination and the password on a predetermined region of the sheet at predetermined intervals in the transport direction D.

### History provision process

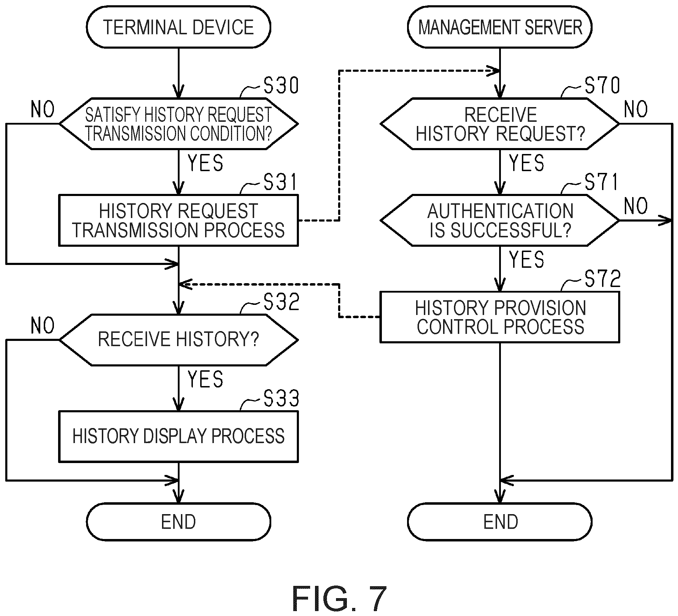

A history provision process will be described with reference to FIG. 7. The history provision process is a process executed by the terminal device and the management server 12 at a predetermined cycle.

As shown in Fig. 7, in the terminal device, in step S30, the terminal control section determines whether or not the history request transmission condition is satisfied. The history request transmission condition may be satisfied in response to the user's instruction. In particular, the terminal control section may determine that the history request transmission condition is satisfied by capturing the access destination image 93 printed on the sheet and inputting the password in response to the user's instruction.

If the terminal control section determines that the history request transmission condition is not satisfied, the process proceeds to step S32. If the terminal control section determines that the history request transmission condition is satisfied, the process proceeds to step S31.

In step S31, the terminal control section executes a history request transmission process. In this process, the terminal control section transmits a history request to the management server 12. The history request includes the access destination and the password that are entered in response to the user's instruction. The history request may include information for communicating with the terminal device.

In the management server 12, in step S70, the management control section 20 determines whether a history request has been received from the terminal device. If the management control section 20 determines that the history request has not been received from the terminal device, the management control section 20 ends the history provision process. If the management control section 20 determines that the history request has been received from the terminal device, the process proceeds to step S71.

In step S71, the management control section 20 determines whether or not authentication has been successfully completed based on the received access destination and the password. If the management control section 20 determines that the authentication has not been successfully performed, the management control section 20 ends the history provision process. If the management control section 20 determines that the authentication has been successfully performed, the process proceeds to step S72.

In step S72, the management control section 20 executes a history provision control process. In this process, the management control section 20 transmits the production history corresponding to the access destination and the password to the terminal device. By this, the management control section 20 can provide the production history to the terminal device.

In the terminal device, in step S32, the terminal control section determines whether or not it has received the production history from the management server 12. If the terminal control section determines that the production history has not been received from the management server 12, the terminal control section ends the history provision process. If the terminal control section determines that the production history has been received from the management server 12, the process proceeds to step S33.

In step S33, the terminal control section executes a history display process. In this process, the terminal control section displays the production history on the terminal display section. By this, the production history can be confirmed by accessing the access destination printed in the predetermined region of the sheet.

### Operation and effects of the first embodiment

The operation and effects of the first embodiment will be described.
(1) In the related art, there has been low traceability for produced sheets, and there is a desire to improve convenience. The printing section 46 prints the access destination for accessing the sheet configuration component and the sheet production condition registered as the production history in the predetermined region of the sheet. According to this configuration, by accessing the access destination printed on the predetermined region of the sheet, it is possible to obtain the sheet configuration component and the sheet production condition as the production history. By this, the traceability of the produced sheet can be improved. Therefore, convenience can be improved.
(2) The printing section 46 prints the password that was registered as the production history in the predetermined region of the sheet. According to this configuration, it is possible to access the sheet configuration component and the sheet production condition as the production history using the password printed on the predetermined region of the sheet. By this, it is possible to improve the traceability to the produced sheet, thereby enhancing the security. Therefore, convenience can be improved.
(3) The printing section 46 prints the access destination at predetermined intervals in the transport direction D. According to this configuration, it is possible to increase the likelihood that the access destination printed on the sheet is exposed. Therefore, convenience can be improved.
(4) The management control section 20 registers the printing condition as the production history in association with the sheet configuration component and the sheet production condition. According to this configuration, by accessing the access destination printed in the predetermined region of the sheet, it is possible to acquire the printing condition as the production history. By this, the traceability of the produced sheet can be improved. Therefore, convenience can be improved.
(5) The management control section 20 registers the drying condition as the production history in association with the sheet configuration component and the sheet production condition. According to this configuration, it is possible to acquire the drying condition as the production history by accessing the access destination printed in the predetermined region of the sheet. By this, the traceability of the produced sheet can be improved. Therefore, convenience can be improved.
(6) The management control section 20 registers the post-process condition as the production history in association with the sheet configuration component and the sheet production condition. According to this configuration, it is possible to acquire the post-process condition as the production history by accessing the access destination printed in the predetermined region of the sheet. By this, the traceability of the produced sheet can be improved. Therefore, convenience can be improved.
(7) The management control section 20 acquires the sheet configuration component and the sheet production condition as the production history by receiving the sheet configuration component and the sheet production condition from the control device 11 such as the printing device 14. The management control section 20 registers the access destination so as to correspond to the sheet configuration component and the sheet production condition. The management control section 20 provides the access destination to the printing device 14 when the provision condition of the access destination is satisfied. According to this configuration, the sheet configuration component and the sheet production condition as the production history can be centrally managed by the management server 12. Therefore, convenience can be improved.
(8) The management control section 20 acquires the drying condition as the production history by receiving the drying condition from the control device 11 such as the printing device 14. According to this configuration, the drying condition as the production history can be centrally managed by management server 12. Therefore, convenience can be improved.
(9) The management control section 20 acquires the post-process condition as the production history by receiving the post-process condition from the control device 11 such as the printing device 14. According to this configuration, the post-process condition as the production history can be centrally managed by the management server 12. Therefore, convenience can be improved.
(10) In the prior art, it has not been easy to maintain a balance between the setting relating to the production of the sheet and the setting relating to printing on the sheet. Specifically, it has not been easy to maintain a balance between the setting relating to the production of the sheet, the setting relating to the printing on the sheet, the setting relating to the drying of the sheet, and the setting relating to the post-process for the sheet. Therefore, it is desired to improve convenience. The management control section 20 determines the recommended setting of the printing condition based on the setting of the sheet production condition. By this, the balance between the setting of the sheet production condition and the setting of the printing condition can be easily maintained. Therefore, convenience can be improved.
(11) The management control section 20 determines the recommended setting of the printing condition based on the correspondence relationship between the recommended setting of the sheet production condition and the recommended setting of the printing condition, and on the setting of the sheet production condition. By this, the balance between the setting of the sheet production condition and the setting of the printing condition can be easily maintained. Therefore, convenience can be improved.
(12) The printing section 46 prints on the sheet based on the recommended setting of the printing condition in response to the user's instruction. According to this configuration, it is possible to switch whether or not to print on the sheet based on the recommended setting of the printing condition that has been determined, according to the user's intentions. Therefore, convenience can be improved.
(13) The management control section 20 determines the recommended setting of the printing condition based on the setting of the sheet production condition and the sheet configuration component. By this, it is possible to easily maintain the balance between the setting of the sheet production condition and the setting of the printing condition in consideration of the sheet configuration component. Therefore, convenience can be improved.
(14) The management control section 20 determines the recommended setting of the drying condition based on the setting of the sheet production condition. By this, it is possible to easily maintain the balance between the sheet production condition setting and the drying condition setting. Therefore, convenience can be improved.
(15) The management control section 20 determines the recommended setting of the post-process condition based on the setting of the sheet production condition. By this, it is possible to easily maintain the balance between the setting of the sheet production condition and the setting of the post-process condition. Therefore, convenience can be improved.
(16) The management control section 20 acquires the setting of the sheet production condition by receiving the setting of the sheet production condition from the control device 11 such as the printing device 14. When the provision condition of the recommended setting is satisfied, the management control section 20 provides the recommended setting of the printing condition to the printing device 14. According to this configuration, the recommended setting of the printing condition, which will be determined based on the setting of the sheet production condition, can be centrally managed by the management server 12. Therefore, convenience can be improved.
(17) The management control section 20 acquires the setting of the sheet production condition by receiving the setting of the sheet production condition from the control device 11 such as the printing device 14. When the provision condition of the recommended setting is satisfied, the management control section 20 provides the recommended setting of the drying condition to the drying device 15. According to this configuration, the recommended setting of the drying condition, which will be determined based on the setting of the sheet production condition, can be centrally managed by the management server 12. Therefore, convenience can be improved.
(18) The management control section 20 acquires the setting of the sheet production condition by receiving the setting of the sheet production condition from the control device 11 such as the printing device 14. When the provision condition of the recommended setting is satisfied, the management control section 20 provides the recommended setting of the post-process condition to the post-process device 16. According to this configuration, the recommended setting of the post-process condition, which will be determined based on the setting of the sheet production condition, can be centrally managed by the management server 12. Therefore, convenience can be improved.
(19) The management control section 20 determines the recommended setting of the sheet production condition based on the setting of the printing condition. By this, the balance between the setting of the sheet production condition and the setting of the printing condition can be easily maintained. Therefore, convenience can be improved.
(20) The management control section 20 determines the recommended setting of the sheet production condition based on the correspondence relationship between the recommended setting of the sheet production condition and the recommended setting of the printing condition, and on the setting of the printing condition. By this, the balance between the setting of the sheet production condition and the setting of the printing condition can be more easily maintained. Therefore, convenience can be improved.
(21) The sheet production section 37 produces the sheet based on the recommended setting of the sheet production condition in response to the user's instruction. According to this configuration, it is possible to switch whether or not to produce the sheet based on the recommended setting of the sheet production condition that has been determined, according to the user's intention. Therefore, convenience can be improved.
(22) The management control section 20 determines the recommended setting of the sheet production condition based on the setting of the printing condition and the sheet configuration component. By this, it is possible to easily maintain the balance between the setting of the sheet production condition and the setting of the printing condition in consideration of the sheet configuration component. Therefore, convenience can be improved.
(23) The management control section 20 determines the recommended setting of the drying condition based on the setting of the printing condition. By this, it is possible to easily maintain the balance between the setting of the printing condition and the setting of the drying condition. Therefore, convenience can be improved.
(24) The management control section 20 determines the recommended setting of the post-process condition based on the setting of the printing condition. By this, it is possible to easily maintain the balance between the setting of the printing condition and the setting of the post-process condition. Therefore, convenience can be improved.
(25) The management control section 20 acquires the setting of the printing condition by receiving the setting of the printing condition from the control device 11 such as the printing device 14. When the provision condition of the recommended setting is satisfied, the management control section 20 provides the recommended setting of the sheet production condition to the sheet production device 13. According to this configuration, the recommended setting of the sheet production condition, which will be determined based on the setting of the printing condition, can be centrally managed by the management server 12. Therefore, convenience can be improved.
(26) The management control section 20 acquires the setting of the printing condition by receiving the setting of the printing condition from the control device 11 such as the printing device 14. When the provision condition of the recommended setting is satisfied, the management control section 20 provides the recommended setting of the drying condition to the drying device 15. According to this configuration, the recommended settings of the drying condition, which will be determined based on the setting of the printing condition, can be centrally managed by the management server 12. Therefore, convenience can be improved.
(27) The management control section 20 acquires the setting of the printing condition by receiving the setting of the printing condition from the control device 11 such as the printing device 14. When the provision condition of the recommended setting is satisfied, the management control section 20 provides the recommended setting of the post-process condition to the post-process device 16. According to this configuration, the recommended settings of the post-process condition, which will be determined based on the setting of the printing conditions, can be centrally managed by the management server 12. Therefore, convenience can be improved.

### Modifications

The present embodiment can be implemented with the following modifications. The present embodiment and the following modifications can be implemented in combination with each other as long as there is no technical contradiction.
- The sheet production device 13, the printing device 14, the drying device 15, and the post-process device 16 may share various functions by communicating with each other. As a specific example, the sheet production device 13, the printing device 14, the drying device 15, and the post-process device 16 may be able to control information in each device. The sheet production device 13, the printing device 14, the drying device 15, and the post-process device 16 may be able to refer to setting in each device. The sheet production device 13, the printing device 14, the drying device 15, and the post-process device 16 may allow the user to input instructions for each device. The sheet production device 13, the printing device 14, the drying device 15, and the post-process device 16 may be able to display various images on each device. In this way, the setting control process shown in FIG. 5, the history control process shown in FIG. 6, and the history provision process shown in FIG. 7 may be processes that are executed by any of the control sections in the control device 11. In other words, the configuration is not limited to the one in which the printing device 14 and the management server 12 communicate with each other, and any configuration may be adopted as long as the control device 11 and the management server 12 can communicate with each other.
- If the management control section 20 receives the recommended request from the terminal device, the management control section 20 may provide the recommended setting to the terminal device. If the management control section 20 receives the history request from the control device 11, the management control section 20 may provide the production history to the control device 11. In other words, when the management control section 20 receives the history request from the user, the management control section 20 may provide the production history to the user.
- The sheet production device 13 may be equipped with a coarse crushing section. The coarse crushing section is configured to coarsely crush the raw material introduced into the sheet production device 13. The coarse crushing section supplies the coarsely crushed raw material to the fiber separation section 36. In other words, the raw material may be introduced into the sheet production device 13 in a coarsely crushed state, or the raw material may be introduced in a state before being coarsely crushed.
- A packaged raw material may be introduced into the sheet production device 13. In this case, the sheet production device 13 may be equipped with an unpacking section that unpacks the packaged raw material. The unpacking section may supply an unpacked raw material to the coarse crushing section.
- Multiple types of raw materials may be introduced into the sheet production device 13. In this case, the sheet production device 13 may be provided with a plurality of introduction sections corresponding to a type of the raw materials. The sheet production device 13 may be provided with a plurality of sheet production sections 37 so as to produce a plurality of types of sheets. The sheet production device 13 may perform settings for the raw materials to be introduced into the introduction section and for the timing of switching the raw materials to be introduced in the introduction section.
- The detection section 35 may detect the type of raw material that has been introduced into the sheet production device 13 at an arbitrary timing. As a specific example, the detection section 35 may detect the type of material before the raw material is coarsely crushed by the coarse crushing section. The detection section 35 may detect the type of material after the raw material is coarsely crushed by the coarse crushing section.
- The sheet production device 13 may be equipped with a foreign matter detection section that detects foreign matters contained in the raw material. The sheet production device 13 may be equipped with the foreign matter detection section that detects foreign matters included in the fiber. In other words, the control device 11 may be equipped with the foreign matter detection section. The recycled sheet generation system 10 may be equipped with the foreign matter detection section. The foreign matters may include, for example, at least any of metals, hard resins, and chemical substances. The management control section 20 may acquire the detection result of the foreign matter detection section by receiving the detection result of the foreign matter detection section from the control device 11. The management control section 20 may register the acquired detection result as the production history in the history storage section 21B. The management control section 20 may register that the sheet contains no foreign matters as the production history.
- The sheet production device 13 may be equipped with a foreign matter removal section that removes foreign matters. In other words, the control device 11 may be equipped with the foreign matter removal section. The recycled sheet generation system 10 may be equipped with the foreign matter removal section.
- The sheet production device 13 may be equipped with a sheet detection section that detects information relating to the produced sheet. In other words, the control device 11 may be equipped with the sheet detection section. The recycled sheet generation system 10 may be equipped with the sheet detection section. As a specific example, the sheet detection section may be equipped with an imaging section that detects a stretch amount of the sheet. The sheet detection section may detect the stretch amount of the sheet corresponding to a difference according to tension applied the sheet based on an imaging result captured by the imaging section.
- The sheet production condition may include a detection result by the sheet detection section. In other words, the sheet production condition may include the production result of the sheet. The sheet production condition may include the sheet configuration component.
- The post-process device 16 may perform the post-process for the sheet printed by the printing device 14. In other words, the post-process device 16 may perform the post-process for the sheet before drying by the drying device 15, or may perform the post-process for the sheet after drying by the drying device 15.
- The post-process device 16 may perform a washing process as the post-process. In this case, the management control section 20 may manage a deinking condition as the post-process condition. When pigment ink is used as the printing condition, the management control section 20 may provide the post-process device 16 with physical action deinking as the deinking condition. When dye ink is used as the printing condition, the management control section 20 may provide the post-process device 16 with deinking that includes chemical action as the deinking condition.
- The printing section 46 may print the access destination image 93 and the password image 94 on the front surface of the sheet, or the printing section 46 may print the access destination image 93 and the password image 94 on the back surface of the sheet. The printing section 46 may print the access destination image 93 and the password image 94 on both end sections of the sheet. The printing section 46 may print the access destination image 93 and the password image 94 without a predetermined interval in the transport direction D of the sheet. The printing section 46 may print the access destination image 93 and the password image 94 on the most upstream side in the transport direction D of the sheet. The printing device 14 may print the access destination image 93 and the password image 94 on the most downstream side in the transport direction D of the sheet.
- The printing section 46 may print the access destination image 93 and the password image 94 not on the sheet itself but on a tag attached to the sheet. The printing section 46 may print the access destination image 93 and the password image 94 not on the sheet itself but on a sticker attached to the sheet. In this way, the predetermined region where the access destination image 93 and the password image 94 are printed is not limited to the sheet itself but may be a region associated with the sheet.
- The recycled sheet generation system 10 may be configured to access the access destination of the production history and to perform authentication based on the user ID and the password. The recycled sheet generation system 10 may be configured to acquire production history by accessing the access destination without using the password. In this case, the printing section 46 may not print the password image 94 in the predetermined region of the sheet.
- The print control section 40 may acquire the sheet configuration component or the sheet production condition from the management server 12 or the sheet production device 13. In addition to the access destination image 93 and the password image 94, the printing section 46 may print the sheet configuration component or the sheet production condition on the sheet. The printing section 46 may print a mark for measuring the stretch amount of the sheet.
- The printing section 46 may print information necessary for authentication of the recycled sheet on the sheet. The printing section 46 may print information necessary for the authentication of the recycled sheet on a sheet different from the recycled sheet. The printing section 46 may print application documents necessary for the authentication of the recycled sheet on a sheet paper and may prepare the application documents. The printing section 46 may print a mark indicating authentication of the recycled sheet on the sheet. The printing section 46 may print a mark indicating the presence or absence of chemical substances, the presence or absence of metals, or the presence or absence of materials that induce allergies on the sheet.
- The management server 12 may manage information necessary for the authentication of the recycled sheet as the production history. The management server 12 may provide the printing device 14 with the information necessary for the authentication of the recycled sheet. The authentication of the recycled sheet includes, for example, certifications such as Global Recycled Standard (GRS) and Recycled Claim Standard (RCS).
- The management server 12 may manage whether or not to attach various marks relating to the recycled sheet. The management server 12 may provide to the printing device 14 whether or not the various marks are to be attached to the recycled sheet.
- The management server 12 may manage the amount of carbon dioxide generated and the amount of water used, which are estimated based on the sheet configuration component and the sheet production condition. The management server 12 may provide the amount of carbon dioxide generated and the amount of water used to the printing device 14.
- The management server 12 may acquire environmental information as the history by receiving the environmental information from the control device 11. The environmental information may include at least any of temperature or humidity.
- The management control section 20 may update the recommended setting database stored in the setting storage section 21A by receiving the setting from the control device 11. The management control section 20 may update the recommended setting database stored in the setting storage section 21A by receiving an evaluation result corresponding to the setting from the control device 11. The evaluation result may be input according to a user's instruction. The evaluation result may be acquired based on a detection result obtained by an evaluation detection section equipped with the control device 11. When an evaluation value corresponding to the setting from the control device 11 exceeds a threshold value, the management control section 20 may register the setting in the recommended setting database stored in setting storage section 21A.
- The management control section 20 may provide, based on a part of the clothing to be produced, the recommended setting of the number of layers of the sheet, the recommended setting of the thickness of the sheet, and the recommended setting of the material of each layer of the sheet as the sheet production condition. In this case, the management control section 20 may acquire the part of the clothing to be produced from the control device 11.
- The control device 11 may not be equipped with at least any of the drying device 15 and the post-process device 16. The control device 11 may be equipped with a device different from the sheet production device 13, the printing device 14, the drying device 15, and the post-process device 16.
- As a specific example, the control device 11 may be equipped with a feed out device that feeds out a roll-shaped sheet. The management server 12 may acquire a setting of the feed out condition by the feed out device. The management server 12 may determine a recommended setting of the feed out condition by the feed out device. The feed out condition may include at least any of transport amount, transport speed, and feed out tension of the sheet.
- The control device 11 may include a winding device that winds a roll-shaped sheet. The management server 12 may acquire a setting of a winding condition by the winding device. The management server 12 may determine a recommended setting of the winding condition by the winding device. The winding condition may include at least any of transport amount, transport speed, and winding tension of the sheet.
- At least any of the sheet production device 13, the printing device 14, the drying device 15, and the post-process device 16 may be composed of a plurality of devices. As a specific example, the sheet production device 13 may be equipped with a fiber separation device that has the detection section 35 and the fiber separation section 36, and a production device that has the sheet production section 37.
- The devices constituting the recycled sheet generation system 10 may be installed in one facility or may be installed across a plurality of facilities. As a specific example, the management server 12 may be communicable with the control device 11 installed in a plurality of facilities, or may be communicable with the control device 11 installed in different companies.
- The control device 11 may have some or all of the functions of the management server 12. If the control device 11 has all the functions of the management server 12, the recycled sheet generation system 10 may not be equipped with the management server 12.
- As the printing device 14, any of a serial type printer, a line type printer, and a lateral type printer may be used. The printing device 14 may be an inkjet printer.
- The sheet can be arbitrary and is not limited to recycled fabric, for example, it can be recycled papers. The sheet may be, for example, a textile, a non-woven fabric, clothing, paper, or roll paper. In other words, the sheet may be a recycled sheet produced by depositing the mixture obtained by mixing a treatment agent with fibers obtained by fiber separation of a raw material.
- The liquid can be arbitrarily selected as long as the liquid can be adhered to the medium to perform recording on the medium. For example, the ink includes an ink in which particles of functional material made of solid material such as pigment or metal particles are dissolved, dispersed, or mixed in a solvent, and includes various compositions such as water-based ink, oil-based ink, gel ink, and hot-melt ink.
- As used herein, the phrase "at least any" means one or more of the desired options. As an example, the phrase "at least any of" as used herein means only one option if the number of options is two, or both of the two options. As another example, the phrase "at least any" as used herein means only one option or a combination of any two or more options if the number of options is three or more.

### Supplementary notes

Hereinafter, technical ideas grasped from the above-described embodiment and modifications, and operations and effects thereof will be described. The present technical idea and the operations and effects thereof can be combined with each other within a technically consistent range.
(A) The recycled sheet generation system includes a detection section configured to detect a type of material included in a raw material for producing a sheet; a fiber separation section that generates fibers by separating the raw material for producing the sheet; a sheet production section that produces the sheet by depositing a mixture in which a treatment agent is mixed with the fibers generated by the fiber separation section; a printing section that prints on the sheet produced by the sheet production section; a history acquisition section configured to acquire, as history, a sheet configuration component based on the type of material that is included in the raw material and that was detected by the detection section and a sheet production condition of when the sheet production section produces the sheet; and a registration section that registers, in association with each other, the sheet configuration component and the sheet production condition that were acquired by the history acquisition section, wherein the printing section prints an access destination for accessing the sheet configuration component and the sheet production condition registered by the registration section in a predetermined region of the sheet.

According to this configuration, by accessing the access destination printed in the predetermined region of the sheet, it is possible to acquire the sheet configuration component and the sheet production condition as the history. By this, the traceability of the produced sheet can be improved. Therefore, convenience can be improved.

(B) The recycled sheet generation system described above may be configured such that the registration section registers, in association with the sheet configuration component and the sheet production condition, a password for accessing the sheet configuration component and the sheet production condition and the printing section prints the password registered by the registration section on the predetermined region of the sheet produced by the sheet production section.

According to this configuration, the sheet configuration component and the sheet production condition as the history can be accessed by the password printed in the predetermined region of the sheet. By this, it is possible to improve the traceability to the produced sheet, thereby enhancing the security. Therefore, convenience can be improved.

(C) The recycled sheet generation system describe above may be configured such that further including a transport section that transports the sheet to be printed by the printing section along a transport direction, wherein the printing section prints the access destination at a predetermined interval in the transport direction.

According to this configuration, the access destination is printed on the sheet at predetermined intervals in the transport direction. By this, it is possible to increase the likelihood that the access destination printed on the sheet is exposed. Therefore, convenience can be improved.

(D) The recycled sheet generation system described above may be configured such that the history acquisition section acquires, as the history, a printing condition of when the printing section prints on the sheet and the registration section registers the printing condition in association with the sheet configuration component and the sheet production condition that were acquired by the history acquisition section.

According to this configuration, by accessing the access destination printed in the predetermined region of the sheet, it is possible to acquire the printing condition as the history. By this, the traceability of the produced sheet can be improved. Therefore, convenience can be improved.

(E) The recycled sheet generation system described above may be configured such that further including a drying section configured to dry the sheet printed by the printing section, wherein the history acquisition section acquires, as the history, a drying condition of when the drying section dries the sheet, and the registration section registers the drying condition in association with the sheet configuration component and the sheet production condition that were acquired by the history acquisition section.

According to this configuration, the drying condition as the history can be acquired by accessing the access destination printed in the predetermined region of the sheet. By this, the traceability of the produced sheet can be improved. Therefore, convenience can be improved.

(F) The recycled sheet generation system described above may be configured such that further including a post-process section that performs a post-process for the sheet printed by the printing section, wherein the history acquisition section acquires, as the history, a post-process condition of when the post-process section performed the post-process for the sheet and the registration section registers the post-process condition in association with the sheet configuration component and the sheet production condition that were acquired by the history acquisition section.

According to this configuration, by accessing the access destination printed in the predetermined region of the sheet, the post-process condition as the history can be acquired. By this, the traceability of the produced sheet can be improved. Therefore, convenience can be improved.

(G) The recycled sheet generation system describe above may configured such that further including a control device that performs control related to the sheet that is produced using the separated fibers and a management server communicably connected to the control device, wherein the control device has a sheet production device that produces the sheet using the separated fibers and a printing device that prints on the sheet produced by the sheet production device, the sheet production device has the detection section, the fiber separation section, and the sheet production section, the printing device has the printing section, the management server has the history acquisition section and the registration section, the history acquisition section acquires the sheet configuration component and the sheet production condition as the history by receiving the sheet configuration component and the sheet production condition from the control device, the registration section registers the access destination so as to associate the access destination with the sheet configuration component and the sheet production condition, and the management server has a provision section configured to provide the access destination to the printing device when a provision condition of the access destination is satisfied.

According to this configuration, the sheet configuration component and the sheet production condition as the history can be centrally managed by the management server. Therefore, convenience can be improved.

(H) The recycled sheet generation system described above may be configured such that further including a control device that performs control related to the sheet that is produced using the separated fibers and a management server communicably connected to the control device, wherein the control device has a sheet production device that produces the sheet using the separated fibers, a printing device that prints on the sheet produced by the sheet production device, and a drying device configured to dry the sheet printed by the printing device, the sheet production device has the detection section, the fiber separation section, and the sheet production section, the printing device has the printing section, the drying device has the drying section, the management server has the history acquisition section and the registration section, the history acquisition section acquires the sheet configuration component and the sheet production condition as the history by receiving the sheet configuration component and the sheet production condition from the control device, the registration section registers the access destination so as to associate the access destination with the sheet configuration component and the sheet production condition, the management server has a provision section configured to provide the access destination to the printing device when a provision condition of the access destination is satisfied, and the history acquisition section acquires the drying condition as the history by receiving the drying condition from the control device.

According to this configuration, the drying condition as the history can be intensively managed by the management server. Therefore, convenience can be improved.

(1) The recycled sheet generation system describe above may be configured such that further including a control device that performs control related to the sheet that is produced using the separated fibers and a management server communicably connected to the control device, wherein the control device has a sheet production device that produces the sheet using the separated fibers, a printing device that prints on the sheet produced by the sheet production device, and a post-process device configured to perform a post-process on the sheet printed by the printing device, the sheet production device has the detection section, the fiber separation section, and the sheet production section, the printing device has the printing section, the post-process device has the post-process section, the management server has the history acquisition section and the registration section, the history acquisition section acquires the sheet configuration component and the sheet production condition as the history by receiving the sheet configuration component and the sheet production condition from the control device, the registration section registers the access destination so as to associate the access destination with the sheet configuration component and the sheet production condition, the management server has a provision section configured to provide the access destination to the printing device when a provision condition of the access destination is satisfied, and the history acquisition section acquires the post-process condition as the history by receiving the post-process condition from the control device.

According to this configuration, the post-process condition as the history can be intensively managed by the management server. Therefore, convenience can be improved.

(J) The method for generating a recycled sheet includes, one or more computers executing detecting a type of material included in a raw material for producing a sheet; generating fibers by separating the raw material for producing the sheet; producing the sheet by depositing a mixture in which a treatment agent is mixed with the generated fibers; printing on the sheet; acquiring, as history, a sheet configuration component based on the type of material included in the raw material and a sheet production condition of when producing the sheet; registering the sheet configuration component and the sheet production condition in association with each other; and printing an access destination for accessing the sheet configuration component and the sheet production condition in a predetermined region of the sheet. According to this configuration, the same effect as in (A) can be obtained.

(K) A non-transitory computer readable storage medium storing a program to be executed by one or more computers, the program comprising: detecting a type of material included in a raw material for producing a sheet; generating fibers by separating the raw material for producing the sheet; producing the sheet by depositing a mixture in which a treatment agent is mixed with the generated fibers; printing on the sheet; acquiring, as history, a sheet configuration component based on the type of material included in the raw material and a sheet production condition of when producing the sheet; registering the sheet configuration component and the sheet production condition in association with each other; and printing an access destination for accessing the sheet configuration component and the sheet production condition in a predetermined region of the sheet. According to this configuration, the same effect as in (A) can be obtained.

## Claims

1. A recycled sheet generation system comprising:
a detection section configured to detect a type of material included in a raw material for producing a sheet;
a fiber separation section that generates fibers by separating the raw material for producing the sheet;
a sheet production section that produces the sheet by depositing a mixture in which a treatment agent is mixed with the fibers generated by the fiber separation section;
a printing section that prints on the sheet produced by the sheet production section;
a history acquisition section configured to acquire, as history, a sheet configuration component based on the type of material that is included in the raw material and that was detected by the detection section and a sheet production condition of when the sheet production section produces the sheet; and
a registration section that registers, in association with each other, the sheet configuration component and the sheet production condition that were acquired by the history acquisition section, wherein
the printing section prints an access destination for accessing the sheet configuration component and the sheet production condition registered by the registration section in a predetermined region of the sheet.

2. The recycled sheet generation system according to claim 1, wherein
the registration section registers, in association with the sheet configuration component and the sheet production condition, a password for accessing the sheet configuration component and the sheet production condition and
the printing section prints the password registered by the registration section on the predetermined region of the sheet produced by the sheet production section.

3. The recycled sheet generation system according to claim 1, further comprising:
a transport section that transports the sheet to be printed by the printing section along a transport direction, wherein
the printing section prints the access destination at a predetermined interval in the transport direction.

4. The recycled sheet generation system according to claim 1, wherein
the history acquisition section acquires, as the history, a printing condition of when the printing section prints on the sheet and
the registration section registers the printing condition in association with the sheet configuration component and the sheet production condition that were acquired by the history acquisition section.

5. The recycled sheet generation system according to claim 1, further comprising:
a drying section configured to dry the sheet printed by the printing section, wherein
the history acquisition section acquires, as the history, a drying condition of when the drying section dries the sheet, and
the registration section registers the drying condition in association with the sheet configuration component and the sheet production condition that were acquired by the history acquisition section.

6. The recycled sheet generation system according to claim 1, further comprising:
a post-process section that performs a post-process for the sheet printed by the printing section, wherein
the history acquisition section acquires, as the history, a post-process condition of when the post-process section performed the post-process for the sheet and the registration section registers the post-process condition in association with the sheet configuration component and the sheet production condition that were acquired by the history acquisition section.

7. The recycled sheet generation system according to claim 1, further comprising:
a control device that performs control related to the sheet that is produced using the separated fibers and
a management server communicably connected to the control device, wherein
the control device has
a sheet production device that produces the sheet using the separated fibers and
a printing device that prints on the sheet produced by the sheet production device,
the sheet production device has the detection section, the fiber separation section, and the sheet production section,
the printing device has the printing section,
the management server has the history acquisition section and the registration section,
the history acquisition section acquires the sheet configuration component and the sheet production condition as the history by receiving the sheet configuration component and the sheet production condition from the control device,
the registration section registers the access destination so as to associate the access destination with the sheet configuration component and the sheet production condition, and
the management server has a provision section configured to provide the access destination to the printing device when a provision condition of the access destination is satisfied.

8. The recycled sheet generation system according to claim 5, further comprising:
a control device that performs control related to the sheet that is produced using the separated fibers and
a management server communicably connected to the control device, wherein
the control device has
a sheet production device that produces the sheet using the separated fibers,
a printing device that prints on the sheet produced by the sheet production device, and
a drying device configured to dry the sheet printed by the printing device,
the sheet production device has the detection section, the fiber separation section, and the sheet production section,
the printing device has the printing section,
the drying device has the drying section,
the management server has the history acquisition section and the registration section,
the history acquisition section acquires the sheet configuration component and the sheet production condition as the history by receiving the sheet configuration component and the sheet production condition from the control device,
the registration section registers the access destination so as to associate the access destination with the sheet configuration component and the sheet production condition,
the management server has a provision section configured to provide the access destination to the printing device when a provision condition of the access destination is satisfied, and
the history acquisition section acquires the drying condition as the history by receiving the drying condition from the control device.

9. The recycled sheet generation system according to claim 6, further comprising:
a control device that performs control related to the sheet that is produced using the separated fibers and
a management server communicably connected to the control device, wherein
the control device has
a sheet production device that produces the sheet using the separated fibers,
a printing device that prints on the sheet produced by the sheet production device, and
a post-process device configured to perform a post-process on the sheet printed by the printing device,
the sheet production device has the detection section, the fiber separation section, and the sheet production section,
the printing device has the printing section,
the post-process device has the post-process section,
the management server has the history acquisition section and the registration section,
the history acquisition section acquires the sheet configuration component and the sheet production condition as the history by receiving the sheet configuration component and the sheet production condition from the control device,
the registration section registers the access destination so as to associate the access destination with the sheet configuration component and the sheet production condition,
the management server has a provision section configured to provide the access destination to the printing device when a provision condition of the access destination is satisfied, and
the history acquisition section acquires the post-process condition as the history by receiving the post-process condition from the control device.

10. A method for generating a recycled sheet, the method comprising:
one or more computers executing
detecting a type of material included in a raw material for producing a sheet;
generating fibers by separating the raw material for producing the sheet;
producing the sheet by depositing a mixture in which a treatment agent is mixed with the generated fibers;
printing on the sheet;
acquiring, as history, a sheet configuration component based on the type of material included in the raw material and a sheet production condition of when producing the sheet;
registering the sheet configuration component and the sheet production condition in association with each other; and
printing an access destination for accessing the sheet configuration component and the sheet production condition in a predetermined region of the sheet.

11. A non-transitory computer readable storage medium storing a program to be executed by one or more computers, the program comprising:
detecting a type of material included in a raw material for producing a sheet;
generating fibers by separating the raw material for producing the sheet;
producing the sheet by depositing a mixture in which a treatment agent is mixed with the generated fibers;
printing on the sheet;
acquiring, as history, a sheet configuration component based on the type of material included in the raw material and a sheet production condition of when producing the sheet;
registering the sheet configuration component and the sheet production condition in association with each other; and
printing an access destination for accessing the sheet configuration component and the sheet production condition in a predetermined region of the sheet.
